# EUROPÄISCHE PATENTSCHRIFT

(11) **EP 1 397 267 B1**
(45) Veröffentlichungstag und Bekanntmachung des Hinweises auf die Patenterteilung: **16.01.2008**
(21) Anmeldenummer: 02754707.4
(22) Anmeldetag: 19.06.2002
(51) Int. Cl.: B60K 17/30, B60K 7/00

(54) **GETRIEBE FÜR EIN LENKBARES ANTRIEBSRAD**
TRANSMISSION FOR A STEERABLE DRIVE WHEEL
TRANSMISSION POUR ROUE MOTRICE DIRIGEABLE

(30) Priorität: 21.06.2001 DE 10130100
(43) Veröffentlichungstag der Anmeldung: 17.03.2004
(73) Patentinhaber: ZF FRIEDRICHSHAFEN AG, 88038 Friedrichshafen (DE)
(72) Erfinder: MANN, Egon, 88045 Friedrichshafen (DE); SCHARFENBERG, Stephan, 99869 Tüttleben (DE); STÜBNER, Frank, 99894 Ernstroda (DE)
(86) Internationale Anmeldenummer: PCT/EP2002/006756
(87) Internationale Veröffentlichungsnummer: WO 2003/000515

(56) Entgegenhaltungen:
- DE-A- 19 826 067
- DE-U- 9 208 118
- DE-U- 9 319 187
- FR-A- 2 726 230

## Beschreibung

Die Erfindung betrifft ein Getriebe für ein lenkbares Antriebsrad nach der im Oberbegriff von Anspruch 1 näher definierten Art.

Ein Getriebe mit einem lenkbaren Antriebsrad wird insbesondere bei Flurförderfahrzeugen, wie z. B. Gehgeräten, eingesetzt. Bei dieser Art von Antrieben ist das Getriebegehäuse schwenkbar um eine Schwenkachse angeordnet, wodurch das Antriebsrad, welches mit dem Getriebegehäuse in Verbindung steht, so geschwenkt werden kann, daß das Fahrzeug lenkbar ist. Der Antriebsmotor, welcher über das Getriebe das Antriebsrad antreibt, ist ebenfalls um eine vertikale Achse drehbar angeordnet. Um eine Untersetzung zwischen dem Antriebsmotor und dem Antriebsrad zu schaffen, wird häufig ein Stirnradgetriebe in Verbindung mit einem Winkelgetriebe verwendet. Das Stirnradgetriebe besteht vorzugsweise aus einem ersten Stirnrad, welches mit der Antriebswelle des Antriebsmotors verbunden ist, und einem zweiten Stirnrad, welches mit dem Winkelgetriebe verbunden ist.

Die DE 198 26 067 A1 offenbart ein Getriebe, insbesondere für ein lenkbares Rad eines Flurförderfahrzeugs, bei welcher eine Antriebswelle eines Antriebsmotors ein erstes Stirnrad antreibt, welches mit einem zweiten Stirnrad in Wirkverbindung steht, und über ein Winkelgetriebe ein Antriebsrad antreibt, wobei das erste Stirnrad über eine formschlüssige Keilverbindung mit der Antriebswelle verbunden ist. Bei Gehgeräten ist besonders der Bauraum in radialer Richtung, insbesondere im Bereich des Stirnradgetriebes, sehr beengt. Auch ist das Getriebe in vertikaler Richtung kompakt auszuführen.

Die DE9208118U beinhaltet die Merkmale des Oberbegriffs des Anspruchs 1 offenbart einen Antriebsmotor mit einem Getriebe für ein lenkbares Antriebsrad bei welchem eine Antriebswelle des Antriebsmotors einstückig mit einem ersten Stirnrad ausgebildet ist und das erste Stirnrad über ein zweites Stirnrad und einen Winkeltrieb das Antriebsrad antriebt, wobei das erste Stirnrad, das zweite Stirnrad und der Winkeltrieb in einem Getriebegehäuse integriert angeordnet sind.

Der vorliegenden Erfindung liegt die Aufgabe zugrunde, ein Getriebe, insbesondere für ein lenkbares Rad eines Flurförderfahrzeugs, zu schaffen, welches in seiner radialen und axialen Erstreckung kompakt baut und wenig Teile aufweist.

Die vorliegende Erfindung wird mit einem, auch die kennzeichnenden Merkmale des Hauptanspruchs aufweisenden, gattungsgemäßen Getriebe gelöst.

Erfindungsgemäß weist das Getriebe einen Antriebsmotor auf, welcher vorzugsweise als schnell drehender Asynchronmotor ausgebildet ist, dessen Antriebswelle einstückig mit einem ersten Stirnrad eines Stirnradgetriebes ausgebildet ist. Das Stirnradgetriebe treibt über ein Winkelgetriebe das Antriebsrad an. Das Stirnradgetriebe und das Winkelgetriebe sind in einem einzigen Getriebegehäuse integriert. Der Antriebsmotor weist ein erstes, dem Getriebegehäuse zugewandtes Lagerschild auf, welches die Antriebswelle lagert und mit dem Getriebegehäuse verbindbar ist. Ein Wälzlager, über welches das Getriebe mit dem Fahrzeugrahmen in Verbindung steht, ist zwischen dem Getriebegehäuse und dem ersten Lagerschild des Antriebsmotors angeordnet. Durch Verbindungselemente, welche den Antriebsmotor mit dem Getriebegehäuse verbinden, wird das Wälzlager zwischen dem Getriebegehäuse und dem ersten Lagerschild des Antriebsmotors gehalten. Das zweite Lagerschild des Antriebsmotors, welches über Verbindungselemente mit dem ersten Lagerschild des Antriebsmotors in Verbindung steht, beinhaltet die Lagerung der Antriebswelle des Antriebsmotors und kann Aufnahmen für Sensoren sowie Befestigungsteile der Betriebsbremse aufweisen. Ein Stator ist zwischen dem ersten und dem zweiten Lagerschild angeordnet und wird durch Verbindung des ersten Lagerschildes mit dem zweiten Lagerschild über die Verbindungselemente kraftschlüssig gehalten. Somit kann auf ein zusätzliches Antriebsmotorgehäuse verzichtet werden. Vorzugsweise werden das Getriebegehäuse, das erste Lagerschild und das zweite Lagerschild über gemeinsame Verbindungselemente verbunden. Vorzugsweise wird das Wälzlager kraftschlüssig zwischen dem ersten Lagerschild und dem Getriebegehäuse gehalten. Vorzugsweise ist die Verzahnung der Stirnradstufe schrägverzahnt. Das Winkelgetriebe ist vorzugsweise als Hypoid-Kegelradgetriebe ausgebildet, welches vorzugsweise eine Übersetzung zwischen 7,0 und 7,5 aufweisen kann. Die Stirnradstufe kann vorzugsweise eine Übersetzung von 4,0 bis 5,5 aufweisen, wobei der Antriebsmotor als schnell laufender Antriebsmotor ausgebildet ist, welcher nahezu 6 000 U/min aufweist. Das Tellerrad des Winkelgetriebes ist vorzugsweise auf eine Welle des Antriebsrades aufgepreßt, wodurch Toleranzen, welche sich im Geräusch des Antriebs negativ auswirken, minimiert werden. Das Antriebsrad kann einstückig oder über Verbindungselemente mit dieser Welle verbunden sein.

Indem das erste Stirnrad einstückig mit der Antriebswelle des Antriebsmotors verbunden ist und das Stirnradgetriebe und das Kegelgetriebe in einem einzigen Getriebegehäuse integriert sind, ist es möglich, insbesondere die radiale Erstreckung des Getriebes zu minimieren. Ebenso kann die Länge der Ritzelwelle des Winkelgetriebes kurz ausgeführt werden, welches sich positiv auf die Geräuschentwicklung auswirkt. Indem die Hauptübersetzung im Winkelgetriebe angeordnet ist, kann das Stirnradgetriebe kompakt ausgeführt werden, welches sich positiv auf dessen radiale Erstreckung auswirkt. Durch die Anordnung des Wälzlagers zwischen dem Getriebegehäuse und dem ersten Lagerschild sowie der Verbindung des Getriebegehäuses des ersten Lagerschildes und des zweiten Lagerschildes über gemeinsame Verbindungselemente kann die Anzahl der Teile reduziert werden. Durch die Verwendung eines schnell drehenden Asynchronmotors in Verbindung mit einem hochuntersetzenden Getriebe kann die radiale Erstreckung des Antriebsmotors minimiert werden.

Weitere Merkmale sind der Figuren-Beschreibung zu entnehmen. Es zeigen:

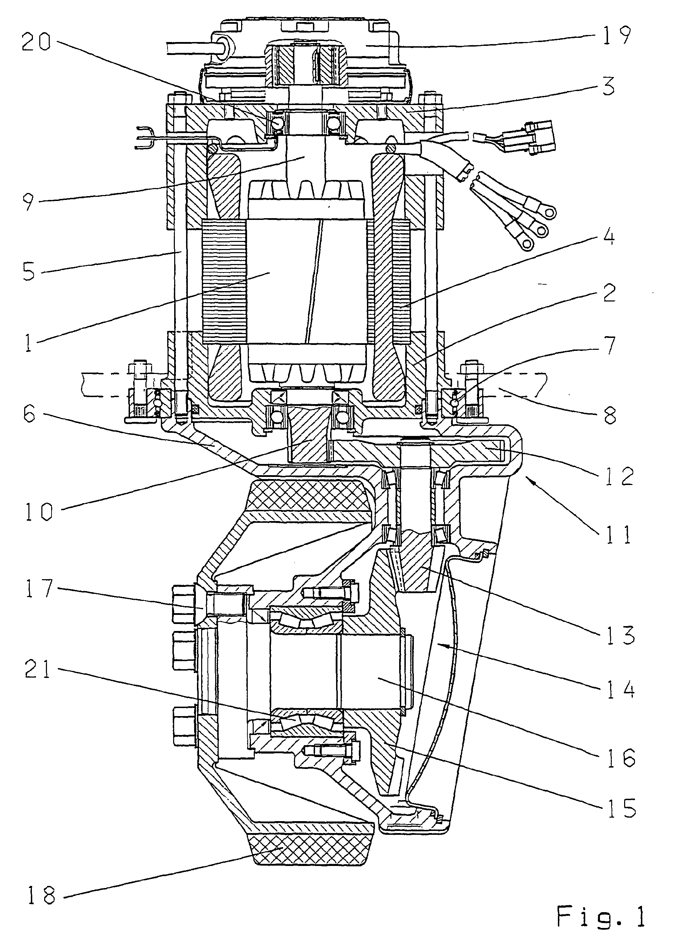

- Fig. 1: ein Getriebe mit einer Lagerung des Antriebsrades über Kegelrollenlager;

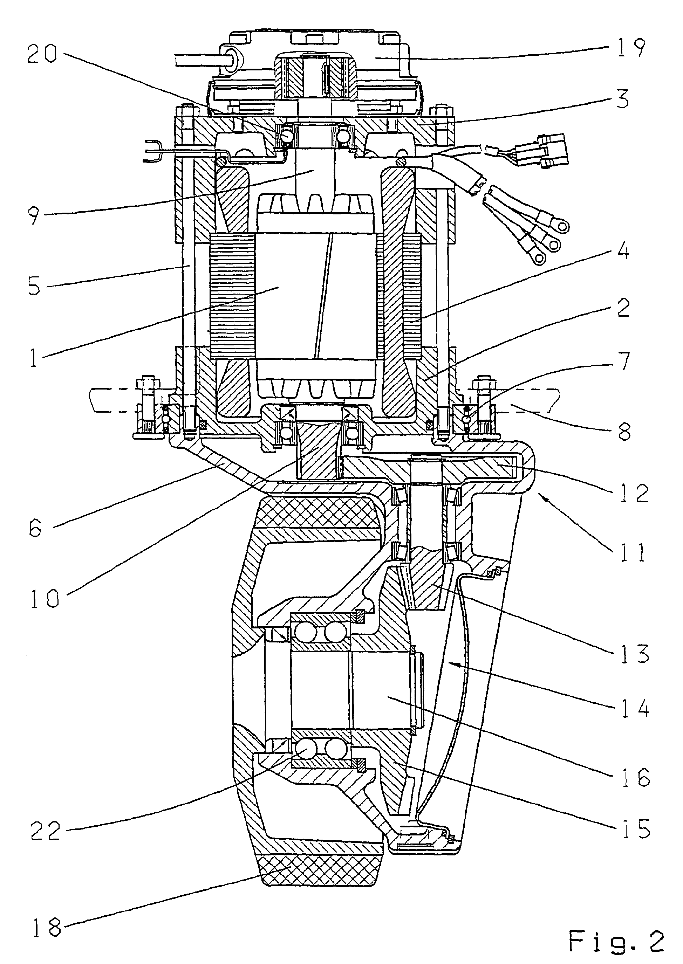

- Fig. 2: ein Getriebe mit einem Antriebsrad mit einer Lagerung über ein zweireihiges Schrägkugellager und

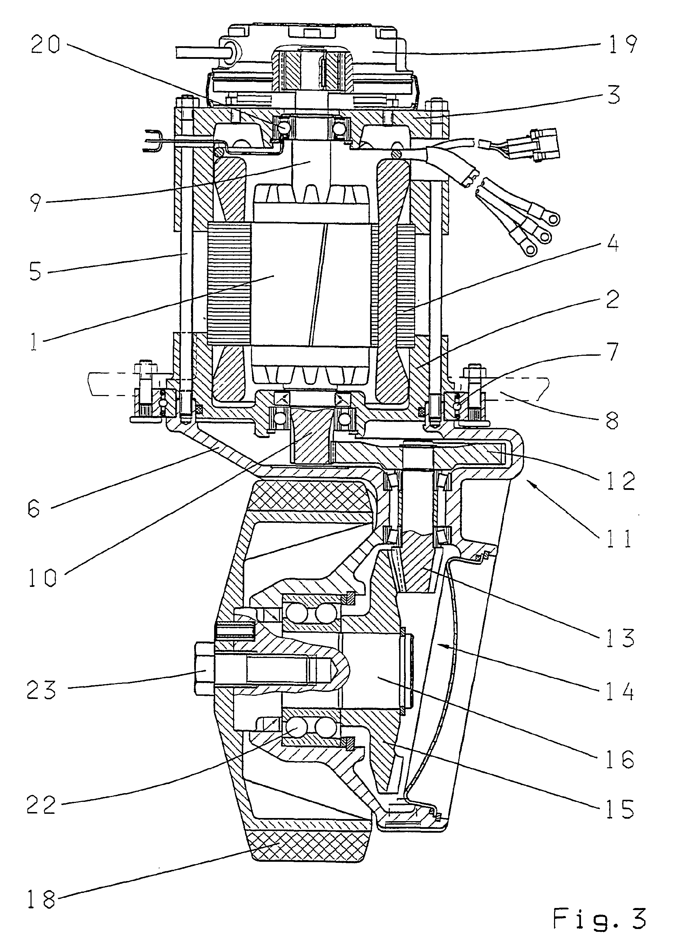

- Fig. 3: ein Getriebe mit einem Antriebsrad, welches über eine Zentralschraube gehalten wird.

### Fig. 1:

Ein Antriebsmotor 1 besteht aus einem ersten Lagerschild 2, einem zweiten Lagerschild 3 und einem Stator 4, welcher zwischen dem ersten Lagerschild 2 und dem zweiten Lagerschild 3 angeordnet ist. Das erste Lagerschild 2 und das zweite Lagerschild 3 sind über Verbindungselemente 5 mit dem Getriebegehäuse 6 verbunden. Zwischen dem ersten Lagerschild 2 und dem Getriebegehäuse 6 ist ein Wälzlager 7 angeordnet, über welches das Getriebe mit dem Fahrzeugrahmen 8 in Verbindung steht. Am Motor ist eine nicht dargestellte Lenkanbindung angeordnet, mittels welcher das Getriebe über das Wälzlager 7 schwenkbar ist. Die Antriebswelle 9 des Antriebsmotors 1 ist einstückig mit einem ersten Stirnrad 10 eines Stirnradgetriebes 11 ausgebildet. Das erste Stirnrad 10 treibt ein zweites Stirnrad 12 an, welches ein Ritzel 13 eines Winkelgetriebes antreibt. Das Ritzel 13 steht mit einem Tellerrad 15 des Winkelgetriebes 14 in Verbindung, welches mit einer Welle 16 in kraftschlüssiger Verbindung steht, mit welcher über Verbindungselemente 17 ein Antriebsrad 18 verbunden ist. Das Stirnradgetriebe 11 und das Winkelgetriebe 14 sind in das Getriebegehäuse 6 integriert. Das Winkelgetriebe ist vorzugsweise als Hypoid-Kegelradsatz mit Spiralverzahnung ausgebildet. Indem die Welle des Ritzels 13 sehr kurz ausgebildet ist, kann das Winkelgetriebe geräuscharm ausgelegt werden. Mit dem zweiten Lagerschild 3 steht eine Bremse 19 und ein Sensorlager 20 in Verbindung. Die Welle 16 ist über ein Kegelrollenlager 21 in O-Anordnung im Getriebegehäuse 6 gelagert.

### Fig. 2:

Das Antriebsrad 18 ist einstückig mit der Welle 16 ausgeführt und über ein zweireihiges Schrägkugellager 22 mit dem Getriebegehäuse 6 verbunden.

### Fig. 3:

Das Antriebsrad 18 ist über eine Zentralschraube 23 mit der Welle 16 verbunden.

### Bezugszeichen

- 1: Antriebsmotor
- 2: erstes Lagerschild
- 3: zweites Lagerschild
- 4: Stator
- 5: Verbindungselemente
- 6: Getriebegehäuse
- 7: Wälzlager
- 8: Fahrzeugrahmen
- 9: Antriebswelle
- 10: erstes Stirnrad
- 11: Stirnradgetriebe
- 12: zweites Stirnrad
- 13: Ritzel
- 14: Winkelgetriebe
- 15: Tellerrad
- 16: Welle
- 17: Verbindungselemente
- 18: Antriebsrad
- 19: Bremse
- 20: Sensorlager
- 21: Kegelrollenlager
- 22: Schrägkugellager
- 23: Zentralschraube

## Patentansprüche

1. Antriebsmotor mit Getriebe, insbesondere für ein lenkbares Rad eines Flurförderfahrzeugs, welches um eine vertikale Schwenkachse schwenkbar im Fahrzeugrahmen (8) angeordnet ist, und auf welchem koaxial zur Schwenkachse ein Antriebsmotor (1) mit einer Antriebswelle (9) anbringbar ist, welcher ein Stirnradgetriebe (11) mit einem ersten Stirnrad (10) und einem zweiten Stirnrad (12) antreibt, welches ein Winkelgetriebe (14) zum Antrieb des lenkbaren Rades (18) antreibt, wobei das erste Stirnrad (10) und das Winkelgetriebe (14) in einem einzigen Getriebegehäuse (6) integriert angeordnet sind, wobei das erste Stirnrad (10) einstückig mit der Antriebswelle (9) ausgebildet ist **dadurch gekennzeichnet, dass** das Getriebegehäuse (6) die in radialer Richtung vom ersten Stirnrad entfernt liegende Hälfte des zweiten Stirnrades (12) U-förmig weitgehend umschließt.

2. Antriebsmotor mit Getriebe nach Anspruch 1, **dadurch gekennzeichnet, dass** das Getriebegehäuse (6) unmittelbar benachbart zum Gehäuse (2) des Antriebsmotors (1) angeordnet ist.

3. Antriebsmotor mit Getriebe nach Anspruch 1, **dadurch gekennzeichnet, dass** ein Wälzlager (7) zwischen dem Getriebegehäuse (6) und einem Lagerschild (2) des Antriebsmotors (1) angeordnet ist.

4. Antriebsmotor mit Getriebe nach Anspruch 1, **dadurch gekennzeichnet, dass** der Antriebsmotor (1) ein erstes (2) und ein zweites Lagerschild (3) aufweist, welche über Verbindungselemente (5) mit dem Getriebegehäuse (6) verbunden sind.

5. Antriebsmotor mit Getriebe nach Anspruch 1, **dadurch gekennzeichnet, dass** das Winkelgetriebe (14) als ein Hypoid-Kegelgetriebe ausgebildet ist.

6. Antriebsmotor mit Getriebe nach Anspruch 1, **dadurch gekennzeichnet, dass** der Antriebsmotor (1) ein Drehstrom-Asynchronmotor ist.

7. Antriebsmotor mit Getriebe nach Anspruch 1, **dadurch gekennzeichnet, dass** die Hauptuntersetzung im Winkelgetriebe (14) angeordnet ist.

## Claims

1. The invention relates to a drive motor with a transmission, especially for a steerable wheel of a floor conveyor, which is arranged for swiveling around a vertical swivel axis in the vehicle frame (8), and on which a drive motor (1) with a drive shaft (9) can be attached coaxially in relation to the swivel axis, with this drive motor driving a transmission (11) with a first spur gear (10) and a second spur gear (12), which drives an angle drive (14) for driving the steerable wheel (18), with the first spur gear (10) and the angle gear (14) being arranged in a single transmission housing (6), and with the first spur gear (10) forming a single piece with the drive shaft (9); **characterized in that** the halve of the second spur gear (12) located at a radial distance from the first spur gear is largely encompassed in a u-shape manner by the transmission housing (6).

2. A drive motor with transmission according to claim 1, **characterized in that** the transmission housing (6) is arranged in the direct neighborhood of the housing (2) of the drive motor (1).

3. A drive motor with transmission according to claim 1, **characterized in that** an antifriction bearing (7) is arranged between the transmission housing (6) and a bearing bracket (2) of the drive motor (1).

4. A drive motor with transmission according to claim 1, **characterized in that** the drive motor (1) features a first (2) and a second bearing bracket (3), with the latter being connected to the transmission housing (6) via connecting elements (5).

5. A drive motor with transmission according to claim 1, **characterized in that** the angle drive (14) is designed as a hypoid bevel gear.

6. A drive motor with transmission according to claim 1, **characterized in that** the drive motor (1) is a three-phase asynchronous motor.

7. A drive motor with transmission according to claim 1, **characterized in that** the main reduction gear is arranged in the angle gear (14).

## Revendications

1. Moteur d'entraînement avec train d'engrenages, en particulier pour une roue orientable d'un véhicule de manutention qui est montée pivotante autour d'un axe de pivotement vertical dans le châssis (8) du véhicule et sur laquelle peut être monté coaxialement à l'axe de pivotement un moteur d'entraînement (1) pourvu d'un arbre d'entraînement (9), moteur qui entraîne un train d'engrenages à roues droites (11) comportant une première roue droite (10) et une seconde roue droite (12), laquelle entraîne un renvoi d'angle (14) pour l'entraînement de la roue orientable (18), dans lequel la première roue droite (10), le train d'engrenages et le renvoi d'angle (14) sont intégrés dans un seul et même carter de train d'engrenages (6), et dans lequel la première roue droite (10) est d'une seule pièce avec l'arbre d'entraînement (9), **caractérisé en ce que** le carter de train d'engrenages (6) entoure sensiblement en forme de U, la moitié de la seconde roue droite (12) qui est éloignée de la première roue droite dans la direction radiale.

2. Moteur d'entraînement avec mécanisme selon la revendication 1, **caractérisé en ce que** le carter de train d'engrenages (6) est disposé immédiatement adjacent au carter (2) du moteur d'entraînement (1).

3. Moteur d'entraînement avec mécanisme selon la revendication 1, **caractérisé en ce qu'**un roulement (7) est agencé entre le carter de train d'engrenages (6) et un flasque (2) du moteur d'entraînement (1).

4. Moteur d'entraînement avec mécanisme selon la revendication 1, **caractérisé en ce que** le moteur d'entraînement (1) comporte un premier flasque (2) et un second flasque (3), qui sont réunis au carter de train d'engrenages (6) par des éléments d'assemblage (5).

5. Moteur d'entraînement avec mécanisme selon la revendication 1, **caractérisé en ce que** le renvoi d'angle (14) est constitué par un renvoi hypoïde-conique.

6. Moteur d'entraînement avec mécanisme selon la revendication 1, **caractérisé en ce que** le moteur d'entraînement (1) est un moteur asynchrone triphasé.

7. Moteur d'entraînement avec mécanisme selon la revendication 1, **caractérisé en ce que** la réduction principale est prévue dans le renvoi d'angle (14).
